**Europäisches Patentamt**

(19) **European Patent Office**

**Office européen des brevets**

(11) Publication number : **0 329 678 B1**

# (12) EUROPEAN PATENT SPECIFICATION

(45) Date of publication of patent specification :
**17.06.92 Bulletin 92/25**

(51) Int. Cl.⁵ : **F16L 55/18, E03F 3/06**

(21) Application number : **87907155.3**

(22) Date of filing : **20.10.87**

(86) International application number :
**PCT/SE87/00484**

(87) International publication number :
**WO 88/03245 05.05.88 Gazette 88/10**

(54) **METHOD AND DEVICE FOR REPLACING DAMAGED PIPES BURIED IN THE GROUND.**

(30) Priority : **23.10.86 SE 8604519**

(43) Date of publication of application :
**30.08.89 Bulletin 89/35**

(45) Publication of the grant of the patent :
**17.06.92 Bulletin 92/25**

(84) Designated Contracting States :
**AT BE CH DE FR IT LI NL**

(56) References cited :
**DE-A- 3 603 238**
**SE-B- 383 286**
**US-A- 2 387 566**
**US-A- 4 008 118**
**Derwent's abstract No. J9233B/42, SU 642 559**

(73) Proprietor : **UTVECKLINGSBOLAGET MARENO I MALMÖ AB**
**Ripgatan 6**
**S-214 59 Malmö (SE)**

(72) Inventor : **PERSSON, Ronnie**
**Enhögsgatan 14**
**S-212 31 Malmö (SE)**
Inventor : **CARLSSON, Krister**
**Ripgatan 6**
**S-214 50 Malmö (SE)**
Inventor : **MATTSSON, Bengt**
**Langdansvägen 42**
**S-245 00 Staffanstorp (SE)**

(74) Representative : **Rostovanyi, Peter**
**AWAPATENT AB Box 5117**
**S-200 71 Malmö (SE)**

EP 0 329 678 B1

## Description

The present invention relates to a method according to the preamble of the method claim and also to a device according to the preambule of the device claim.

In this technical field, many new types of pipes have come into use over the past years in connection with so-called relining because of the highly increased costs for the excavation and backfilling work required when laying new pipes. In general, these pipes have been of short length and, thus, have given rise to many joints, this making the pipes far more expensive than conventional ones. Further, in relining using such pipes, these have been pressed into an existing pipeline, a consequent problem being that the joints have not been able to withstand the stresses applied to them.

GB-A-1,422,754 discloses a device for lap welding of plastic pipes, and of the type on which the device according to the present invention is based. US-A-4,008,118 discloses a butt fusion machine for fusing of large diameter plastic pipes. DE-A-3,603,238 discloses a method on which the method according to the present invention is based.

It is an object of the present invention to provide a simple and inexpensive relining method which does not necessitate any additional excavation and backfilling operations as compared with the present-day technique for repairing pipes buried in the ground with the relining technique.

Another object of the invention is to make it possible in this type of work, to use conventional standard-length PEH or PEM pipes which can be cut into suitable lengths and descended through narrow shafts or wells.

A further object of the invention is to achieve completely jointless and straight piping.

These objects are achieved with a method and a device as recited in the claims.

With the method and the device according to the invention, it is possible by using ordinary standard-length polyethylene pipes, to reduce the costs for relining by up to two thirds of the costs presently incurred for the same work. Also, the method according to the invention yields considerably improved piping as compared with the methods hitherto used. Practical tests have shown that the method using a low-frequency breaker head can also be used in heavy-duty sewers without causing damage to adjacent piping, e.g. water pipes and the like, by the vibrations from the breaking operation. Thus, the method of the invention is highly useful.

The invention will be described in more detail hereinbelow with reference to the accompanying drawings in which:

Fig. 1 schematically illustrates the method of the invention; and,

Fig. 2, on a larger scale, shows one embodiment of the inventive device for carrying out the method.

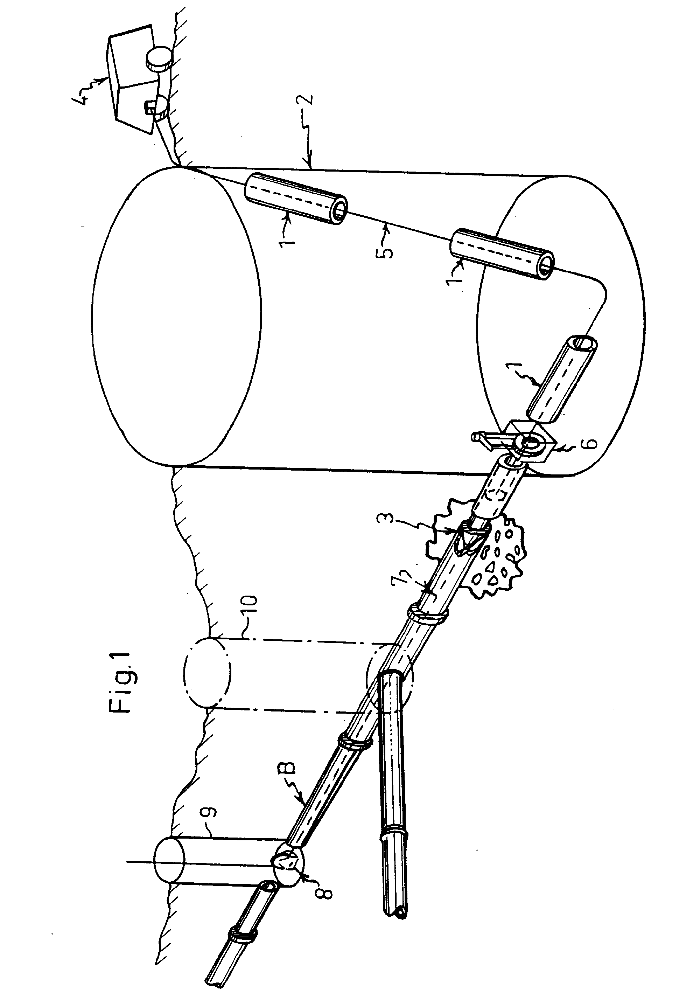

Fig. 1 schematically illustrates the-method according to the invention in which a pipe of thermoplastic, e.g. PEH or PEM, is descended through a shaft or an access well 2 in pipe lengths 1 placed on a compressed-air hose 5 used for powering a breaker head 3 containing a pneumatic hammer, and extending from a compressor 4. At the bottom of the access well, the pipe lengths 1 are arranged one after the other in a fixture (not shown) for coaxial alignment with each other. For joining together the pipe lengths 1, a heater 6, which will be described in more detail hereinbelow, is successively placed between the pipe lengths for heating the ends of the pipes facing each other to a temperature in the vicinity of the plastic deformation temperature of the pipes, whereupon the heater is removed and the pipes are brought together and, thus, are butt-welded to each other.

The above-mentioned breaker head serves to disintegrate the piping 3 to be replaced, which extends between two wells 2 and 9. To this end, the breaker head has such dimensions that when vibrating at a low frequency, it bursts the existing piping B into pieces while being pulled forwards by a wire 7 which is fixed to the front end of the beaker head and passes through the piping B and, via a guide pulley 8 disposed in the well 9 located further ahead on the piping B, is drawn by means of a winch disposed at ground level.

The pipe length 1 first descended through the well 2 is fixedly anchored to the rear end of the breaker head by means of bolts or the like. In this manner, the pipe lengths successively welded together will be advanced through the passage which is made by the breaker head 3 and where the damaged piping B previously lay. When the old piping has been replaced in its entirety, the junctions are sealed in a conventional manner, e.g. with polyurethane foam.

At the points along the repaired piping where so-called service lines should be connected to it, there is arranged a temporary access shaft, which is obtained by digging a hole in the ground at the site of junction and progressively lowering therein steel pipes 10 placed-on top of each other. When the steel pipe section has reached the repaired piping and the contemplated place of junction, earth and gravel are removed therefrom and the service line is connected. The temporary access well consisting of steel pipes 10 can thereafter be disassembled by successively withdrawing the steel pipes from the shaft.

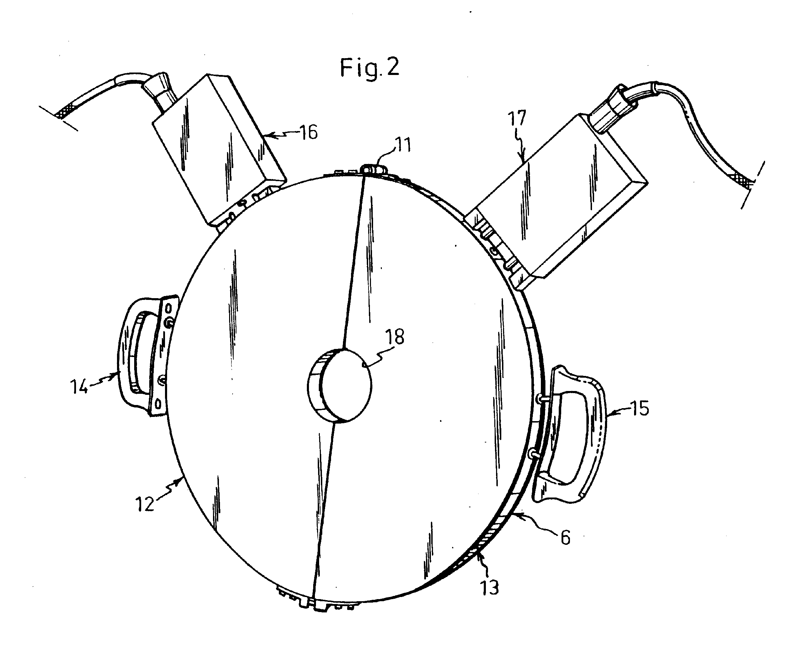

For carrying out the above method, the invention also relies on the heater 6 shown in Fig. 2. The heater consists of two semi-circular parts 12 and 13 which are interconnected by a hinge 11 and which, when brought together, define a central hole for allowing passage of the compressed-air hose 5 for powering the breaker head 3. The hose 5 is passed through said central hole with the heater halves 12, 13 parted. The boundary surface of the hole is suitably lined with a ceramic material. The heater 6 preferably consists of light metal, each half being cast in one block and has an electric heating coil integrated therein. On both sides of the heater, handles 14, 15 are provided for greater ease to handling. Two boxes 16 and 17 hold components, such as thermostats or other control equipment, required for controlling the temperature in the heater halves. Electric supply cables are also connected to these boxes.

## Claims

1. A method for replacing damaged pipes, e.g. sewers, buried in the ground and extending between two shafts or access wells, lengths of a thermoplastic replacement pipe being descended one after the other through one of said shafts, placed on a pressure medium hose (5) by means of which a breaker head (3) is powered for disintegrating the existing damaged pipe (B), while pulling said breaker head from the other shaft through the existing damaged pipe, entraining said pipe lengths (1) which are welded together in said one shaft, **characterised** in that said pipe lengths (1) are welded together by butt-welding of their end faces, for which purpose two heating plates (12, 13) interconnected by a hinge (11) are swung apart to accomodate between themselves the pressure medium hose (5) and are inserted between said pipe end faces, whereupon said plates (12,13) are swung together and caused to heat said pipe end faces to welding temperature, where-after said plates are again swung apart and removed from their position between said pipe end faces which are pressed together.

2. A device for heating the end portions of pipe lengths (1) for carrying out the method as claimed in claim 1, said device having two plate members (12, 13) which are located in the same plane and are interconnected by a hinge (11) and which, when swung together, form a heating plate (6) for heating the pipe end portions to be welded together, said plate members (12, 13) being recessed in their adjoining edge faces in such a manner that a central hole (18) is formed for allowing passage of the compressed-air hose (5), and said plate members being made of light metal and having an electric heating coil integrated therein, **characterised** in that the side surfaces of the heating plate facing away from each other are heating surfaces for butt-welding the pipe end surfaces, and that the hole (18) has a lining of ceramic material for protecting the compressed-air hose.

## Patentansprüche

1. Verfahren zum Austausch von beschädigten, erdverlegten Rohren, z.B. Abflussrohren, die sich zwischen zwei Schächten oder Einsteigbrunnen erstrecken, wobei auf einen Druckflüssigkeitsschlauch (5) gesteckte Schüsse eines Thermoplast-Ersatzrohres nacheinander durch einen der Schächte gesenkt werden, wobei mittels des Druckflüssigkeitsschlauchs ein Brecherkopf (3) zum Zertrümmern des vorhandenen, beschädigten Rohres (B) angetrieben wird, indem er vom anderen Schacht durch das vorhandene, beschädigte Rohr gezogen wird und dabei die im genannten einen Schacht zusammengeschweissten Rohrschüsse (1) mitnimmt, dadurch **gekennzeichnet**, dass die Rohrschüsse (1) durch Stumpfschweissen ihrer Endflächen zusammengeschweisst werden, zu welchem Zweck zwei durch ein Scharnier (11) miteinander verbundene Heizplatten (12, 13) auseinandergeschwenkt werden, um zwischen sich den Druckflüssigkeitsschlauch (5) aufzunehmen, und zwischen die Rohrendflächen eingeführt werden, worauf die Platten (12, 13) zusammengeschwenkt und dazu gebracht werden, die Rohrendflächen auf die Schweisstemperatur zu erhitzen, wonach die Platten nochmals auseinandergeschwenkt und aus ihrer Lage zwischen den Rohrendflächen entfernt werden, welche zusammengepresst werden.

2. Vorrichtung zum Erhitzen der Endabschnitte der Rohrschüsse (1) zur Durchführung des Verfahrens nach Anspruch 1, umfassend zwei Plattenelemente (12, 13), die sich in derselben Ebene befinden und durch ein Scharnier (11) miteinander verbunden sind und in zusammengeschwenkter Lage eine Heizplatte (6) zum Erhitzen der zusammenzuschweissenden Rohrendabschnitte bilden, wobei die aneinandergrenzenden Kantenflächen der Plattenelemente (12, 13) derart ausgespart sind, dass ein Zentrumloch (18) zum Durchführen des Druckluftschlauchs (5) gebildet wird, und die Plattenelemente aus Leichtmetall gefertigt und mit einer eingebauten elektrischen Heizspule versehen sind, dadurch **gekennzeichnet**, dass die voneinander abgewandten Seitenflächen der Heizplatte Heizflächen zum Stumpfschweissen der Rohrendflächen sind, und dass das Loch (18) zum Schutz des Druckluftschlauchs mit keramischem Werkstoff ausgekleidet ist.

## Revendications

1. Procédé de remplacement de conduites endommagées, par exemple des égouts, enfouies dans le sol et s'étendant entre deux puits de descente ou d'accès, procédé dans lequel des tronçons d'une conduite thermoplastique de remplacement sont descendus l'un à la suite de l'autre par l'un desdits puits, en étant enfilés sur un tuyau à fluide sous pression (5) alimentant une tête (3) de cassage de la conduite endommagée (B) existante, ladite tête de cassage étant tirée de l'autre puits à travers la conduite endommagée tout en entraînant lesdits tronçons de conduite (1) qui sont soudés l'un à l'autre dans le premier puits, **caractérisé** en ce que les tronçons de conduite (1) sont soudés bout à bout à leurs surfaces extrêmes, ceci étant fait au moyen de deux plaques chauffantes (12, 13), reliées par une charnière (11), qui sont séparées en pivotant l'une de l'autre afin de recevoir entre elles le tuyau à fluide sous pression (5), et placées entre lesdites surfaces extrêmes des tronçons de conduite, après quoi les plaques (12, 13) sont rapprochées l'une de l'autre et amenées à chauffer lesdites surfaces extrêmes à une température de soudage, les plaques étant ensuite séparées de nouveau l'une de l'autre et enlevées de leur position entre lesdites surfaces extrêmes des tronçons de conduite, qui sont pressées l'une contre l'autre.

2. Dispositif de chauffage des parties extrêmes de tronçons de conduite (1) pour la mise en oeuvre du procédé selon la revendication 1, ledit dispositif ayant deux éléments de plaque (12, 13) qui se trouvent dans le même plan et sont reliés l'un à l'autre par une charnière (11) et qui forment, en état rapproché l'un de l'autre, une plaque chauffante (6) conçue pour chauffer les parties extrêmes des tronçons de conduite à être soudées l'une à l'autre, les surfaces de bord avoisinantes desdits éléments de plaque (12, 13) étant évidées de façon à former un trou central (18) pour le passage du tuyau à air sous pression (5), lesdits éléments de plaque étant réalisés en métal léger et étant munis d'une bobine de chauffage électrique y intégrée, **caractérisé** en ce que les surfaces latérales opposées de la plaque chauffante sont des surfaces chauffantes conçues pour souder bout à bout les surfaces extrêmes des tronçons de conduite, et que le trou (18) a un revêtement céramique prévu pour protéger le tuyau à air sous pression.

Fig.1

EP 0 329 678 B1

Fig.2